Europäisches Patentamt

European Patent Office

Office européen des brevets

(11) Veröffentlichungsnummer: **0 383 132 B1**

(12) **EUROPÄISCHE PATENTSCHRIFT**

(45) Veröffentlichungstag der Patentschrift: **22.09.93**

(21) Anmeldenummer: **90102189.9**

(22) Anmeldetag: **03.02.90**

Die Akte enthält technische Angaben, die nach dem Eingang der Anmeldung eingereicht wurden und die nicht in dieser Patentschrift enthalten sind.

(51) Int. Cl.5: **B01J 23/74**, B01J 23/78,
B01J 23/84, B01J 23/88,
B01J 27/18, B01J 37/00,
C07B 31/00, C07C 5/00,
C07C 29/00, C07C 209/00

(54) Kobaltkatalysatoren.

(30) Priorität: **11.02.89 DE 3904083**

(43) Veröffentlichungstag der Anmeldung:
**22.08.90 Patentblatt 90/34**

(45) Bekanntmachung des Hinweises auf die
Patenterteilung:
**22.09.93 Patentblatt 93/38**

(84) Benannte Vertragsstaaten:
**BE CH DE FR GB LI NL**

(56) Entgegenhaltungen:
**EP-A- 0 239 778**
**EP-A- 0 322 760**
**DE-A- 2 321 101**
**US-A- 3 894 968**

(73) Patentinhaber: **BASF Aktiengesellschaft**
**Carl-Bosch-Strasse 38**
**D-67063 Ludwigshafen(DE)**

(72) Erfinder: **Becker, Hans-Jürgen, Dr.**
**Beutenfeldstrasse 19**
**D-7257 Ditzingen(DE)**
Erfinder: **Lengsfeld, Wolfgang, Dr.**
**Woogstrasse 46**
**D-6703 Limburgerhof(DE)**
Erfinder: **Schossig, Jürgen, Dr.**
**Raiffeisenstrasse 16**
**D-6701 Fussgoenheim(DE)**
Erfinder: **Zirker, Günter, Dr.**
**Schelmenzeile 78**
**D-6700 Ludwigshafen(DE)**

## Beschreibung

Die vorliegende Erfindung betrifft Kobaltkatalysatoren, die Mahlgut von bereits kalzinierten Formlingen enthalten.

Aus der DE-A-12 35 879 sind Kobaltkatalysatoren zur Herstellung von Alkoholen durch katalytische Hydrierung von Carbonsäuren bekannt, die einen Gehalt an Kupfer, Mangan und/oder Chrom, sowie vorzugsweise zusätzlich einer anorganischen Säure, die Polysäuren bilden kann, oder deren Salze, aufweisen.

Aus der DE-A-12 66 736 ist ein Verfahren zur Herstellung von kobalthaltigen Katalysatoren mit hohem Kobaltanteil, die Chrom und/oder Mangan sowie gegebenenfalls weitere metallische Aktivatoren und Pyro- oder Polysäureanionen enthalten, bekannt, indem die Metallsalzlösungen im sauren Bereich vereinigt, durch Zugabe von Alkalilauge oder Alkalicarbonatlösung fällt und anschließend durch Erhitzen vorwiegend in die Oxide überführt werden.

Aus der DE-A-23 21 101 ist ein Verfahren zur Herstellung von im wesentlichen trägerfreien Kobaltkatalysatoren, die Kupfer, Mangen und Phosphorsäure bzw. Phosphat enthalten bekannt, bei dem bestimmte Fällungsbedingungen, wie Temperatur und pH-Wert, einzuhalten sind.

All die vorgenannten Kobaltkatalysatoren sind bezüglich ihrer Standzeiten und bezüglich ihrer Regenerierung z.B. mit 200 °C heißem Druckwasser noch verbesserungsbedürftig.

Der Erfindung lag daher die Aufgabe zugrunde, Kobaltkatalysatoren zu finden, die den vorgenannten Nachteilen abhelfen.

Demgemäß wurden Kobaltkatalysatoren gefunden, welche im kalzinierten, nicht reduzierten Zustand 35 bis 98 Gew.-% Kobaltoxid, 0 bis 40 Gew.-% Kupferoxide, 0 bis 20 Gew.-% Manganoxide, 0 bis 10 Gew.-% Molybdänoxide, 0 bis 10 Gew.-% Alkalioxid, 0 bis 15 Gew.-% Phosphorsäure, Polyphosphorsäure oder deren Salze und gegebenenfalls Füllstoffe enthalten, wobei die Summe der Gewichtsprozente sich immer zu nicht mehr als 100 addieren darf und die durch verformen, Trocknen und Kalzinieren einer Masse aus 5 bis 100 Gew.-% des Mahlguts von bereits kalzinierten Formlingen und 95 bis 0 Gew.-% des gefällten, getrockneten und kalzinierten Niederschlages des Kobaltkatalysators bestehen, sowie ein Verfahren zu ihrer Herstellung und ihre Verwendung zur Hydrierung.

Als Füllstoffe eignen sich solche, wie sie in DE-A-12 35 879, DE-A-12 66 736 und DE-A-23 21 101 beschrieben sind.

Bevorzugt sind solche Katalysatoren, in denen das Gewichtsverhältnis des Kobalts : Kupfer, Mangan und bzw. oder Chrom zwischen 1,5:1 und 300:1 liegt, wobei die genannten Komponenten als im metallischen Zustand befindlich angenommen sind. Bei den Katalysatoren, die außer Kobalt nur eine der genannten anderen Komponenten enthalten, ist Kupfer zweckmäßig in größeren Mengen vorhanden als Mangan oder Chrom. Das Gewichtsverhältnis Kobalt : Kupfer liegt vorzugsweise zwischen 1,5:1 und 50:1, während das Gewichtsverhältnis Kobalt : Mangan oder Chrom vorteilhaft zwischen 9:1 und 300:1 gewählt wird. Besonders geeignete Katalysatoren enthalten Kobalt, Kupfer und Mangan, wobei das Gewichtsverhältnis des Kobalts zu den beiden anderen Komponenten zwischen 1,5:1 und 50:1 liegt. In diesen Katalysatoren befindet sich das Kupfer vorteilhaft in mindestens der gleichen Gewichtsmenge wie das Mangan. Katalysatoren, in denen das Gewichtsverhältnis des Kupfers zum Mangan zwischen 2:1 und 8:1 liegt, haben sich als besonders brauchbar erwiesen.

Geeignete Zusatzstoffe sind beispielsweise Schwefelsäure, Borsäure, Phosphorsäure, Molybdänsäure, Vanadinsäure und Wolframsäure sowie deren Salze mit Metallen der IA-, IIA- und IIIA-Gruppe des Periodensystems der Elemente. Im einzelnen seien beispielsweise Trinatriumphosphat, Natriumtetraborat, Kaliumdihydrogenphosphat, Kalziumhydrogenphosphat. Magnesiumhydrogenborat, Aluminiumphosphat, Natriummolybdat, Ammoniumvanadat und Natriumwolframat erwähnt. Man erzielt häufig besonders gute Ergebnisse mit Katalysatoren, die eine anorganische Säure und ein Salz dieser Säure, beispielsweise Phosphorsäure und ein Phosphat, enthalten. Der Anteil der anorganischen Säure und bzw. oder der Salze beträgt im allgemeinen 0,1 bis 15 Gewichtsprozent, bezogen auf Kobalt.

In aller Regel enthalten sowohl das Mahlgut als auch der gefällte, getrocknete und kalzinierte Niederschlag die Katalysatorbestandteile in äquivalenten Mengenverhältnissen. Es handelt sich hierbei beidesmal um einen Katalysator gleicher Zusammensetzung. Jedoch können auch unterschiedliche Mengenverhältnisse der Katalysatorbestandteile bezüglich Mahlgut und dem gefällten, getrockneten und kalzinierten Niederschlag angewendet werden.

Unter dem Mahlgut sollen hier Kobaltkatalysatoren verstanden werden, die durch Fällen, Waschen, Trocknen, Formpressen, Kalzinieren und Vermahlen erhalten werden. Im Mahlgut beträgt die durchschnittliche Korngröße von 1 bis 200 μm, bevorzugt von 2 bis 100 μm, besonders bevorzugt von 5 bis 50 μm.

Der gegebenenfalls zusätzlich enthaltene Niederschlag soll hier bevorzugt durch Fällung hergestellt, gewaschen, getrocknet und kalziniert sein. Es ist jedoch auch möglich den Niederschlag direkt oder nach dem Waschen oder nach dem Trocknen einzusetzen.

Die Kobaltkatalysatoren lassen sich bevorzugt wie folgt herstellen:

Man mischt demnach entsprechende Mengen von Kobalt, Kupfer, Mangan und Phosphorsäure jeweils in Form entsprechender Mengen ihrer wäßrigen Lösungen, bringt die Lösung mittels Alkalicarbonatlösung zwischen 45 und 50°C auf einen pH-Wert von etwa 8,5, bringt die erhaltene Suspension zur Vervollständigung der Fällung durch Zusatz der ursprünglichen Metallsalzlösung auf einen pH-Wert unterhalb von 7,5, gewinnt, wäscht, trocknet die ausgefällte Masse, kalziniert mit Luft bei 420 bis 540°C, kühlt ab, tränkt mit einer Lösung eines Salzes der Molybdänsäure, fixiert die Molybdänsäure durch eine Säurebehandlung und formt die Masse, kalziniert wiederum. Die so erhaltenen Massen werden ganz oder teilweise gemahlen, erneut verformt, getrocknet und kalziniert.

Die erfindungsgemäßen Katalysatoren haben bessere Standzeiten und erwiesen sich als beständiger z.B. gegen die Druckwasserbehandlung bei 200°C.

Sie eignen sich als Katalysatoren z.B. bei der Hydrierung von Nitrilen, Carbonsäuren und ungesättigten aliphatischen, cycloaliphatischen und aromatischen organischen Verbindungen bei der Umsetzung von Aldehyden mit Aminen und bei der Umsetzung von Alkoholen mit Ammoniak, primären oder sekundären Aminen.

Die erfindungsgemäßen Kobaltkatalysatoren lassen sich durch das Rüttelgewicht, die Porosität und die Schneidehärte charakterisieren.

Bestimmung der Schneidehärte

An einer abwärts fahrbaren Traverse ist ein Stempel mit angesetzter Schneide befestigt. Die Traverse wird mittels Elektromotor mit einer konstanten Geschwindigkeit von 14 mm/Minute nach unten bewegt und die Schneide senkrecht zur Längsachse eines Strangpreßlings aufsetzen lassen. Mittels eines Dehnungsmeßstreifens wird die Kraft gemessen, die zur Durchtrennung des Strangpreßlings erforderlich ist. Die gemessene Kraft wird elektronisch verstärkt und digital angezeigt oder in einen programmierbaren Tischrechner gegeben.

Insgesamt werden 25 Strangpreßlinge mit der Schneide durchtrennt und die Kraft registriert. Mittels Tischrechner werden mittlere Schneidehärte und Standardabweichung errechnet.

Die Angabe der Schneidehärte erfolgt in Mittelwert X und Standardabweichung S.

Bestimmung des Rüttelgewichts

Etwa 1 l Katalysator werden in den Schütttrichter einer Dosierrinne geschüttelt. Am Ende der Dosierrinne steht ein Stampfvolumeter mit einem 1 l Meßzhylinder. Das Stampfvolumeter macht 700 Schläge. Stampfvolumeter und Dosierrinne werden eingeschaltet. Die Dosierung erfolgt derart, daß nach 350 Schlägen der gesamte Katalysator im Meßzylinder liegt. Nach Ende des Stampfens wird das Katalysatorvolumen im Meßzylinder abgelesen und auf einer Waage das Gewicht des Katalysators ermittelt. Aus dem Quotienten

$$RG = \frac{\text{Gewicht (g)}}{\text{Volumen (ml)}} \times 1000$$

wird das Rüttelgewicht in g/l erhalten.

Bestimmung der Porosität

100 g der Probe (= Gewicht A) werden in einem eigens dafür vorgesehenen Kunststofftrichter, von dem vorher das Gewicht bestimmt wurde (= Gewicht B), eingewogen, danach wird der Ablaufstutzen des Trichters mit einem Gummistopfen verschlossen und die Probe mit $H_2O$ überschichtet. Nach einer Verweilzeit von 5 Minuten wird der Stopfen entfernt, wodurch das $H_2O$ abläuft. Nach einer Ablaufzeit von 5 Minuten und nachdem man anhaftendes $H_2O$ am Ablaufstutzen mit einem Handtuch entfernt hat, wird die mit $H_2O$ getränkte Probe samt Trichter zurückgewogen (= Gewicht C).

Porosität in $cm^3/g$:

$$\frac{\text{Gewicht C} - (\text{Gewicht A} + \text{B})}{100}$$

Anmerkung:

Vor jeder Bestimmung müssen die Ablaufkanäle des Siebeinsatzes von eventuellem Kleinkorn befreit werden.

Beispiele

Herstellung des Katalysators

Ein Katalysator wird hergestellt durch zweistufiges Fällen eines Gemisches von Nitratlösungen, bestehend aus 38,3 kg einer 12,6 % Kobalt enthaltenden Kobaltnitratlösung, 2,78 kg einer 12,6% Mangan enthaltenden Mangannitratlösung und 0,199 kg einer 75,3 %igen Phosphorsäure mit 20 %iger Sodalösung. Dabei wird folgendermaßen verfahren: In einem ersten Rührbehälter (Nutzinhalt 6 l) wird die Nitratlösung, die einer Menge von etwa 1,5 kg Oxid/h entspricht, bei 50°C mit so viel Sodalösung unter gutem Rühren versetzt, daß ein pH von 8,5, mit einer Glaselektrode gemessen, aufrechterhalten wird. Die unvollständige Fällung wird in einem zweiten Rührbehälter dann ebenfalls kontinuierlich mit weiterer Metallsalzlösung auf einen pH von 6,8 bis 7,5 gebracht, wobei die Fällung vollständig wird. Die Fällung wird gewaschen und getrocknet.

Dabei erhält man ein basisches Carbonat mit einer BET-Oberfläche von 120 m$^2$/g. Dieses Carbonat wird dann bei einer Temperatur im Bereich von 420 bis 540°C im Luftstrom zu Oxid zersetzt und mit voll entsalztem Wasser das restliche Alkali herausgewaschen, 4 kg des gewaschenen und getrockneten Oxids werden nun in einem Kneter mit 652 g einer 25,5 %igen MoO$_3$ enthaltenden Auflösung von technischem Molybdänoxidhydrat in wäßriger Ammoniaklösung versetzt und durch Kneten vermischt. Man gibt außerdem die bei der Waschprozessen verlorene Phosphorsäure zu, trägt in den Kneter dann 285 g einer 65,3 %igen HNO$_3$ und 1300 g vollentsalztes Wasser ein und knetet intensiv 2,5 Stunden. Die Masse wird dann zu Strangpreßlingen verformt, getrocknet und bei 500°C 6 Stunden kalziniert. Die erhaltenen Strangpreßlinge haben einen Durchmesser von 4 mm, ein Schüttgewicht von 1700 g/l und eine Porosität von 0,16 m$^3$/g, die Härtezahl beträgt 524.

Die so erhaltenen Strangpreßlinge werden auf einer Mühle zu einem Pulver mit einer mittleren Kornfeinheit von 9,8 μm gemahlen. Das Pulver wird mit 30 % Originalpulver in einem Kneter gemischt. Die Masse wird zu 4 mm Strangpreßlingen verformt, getrocknet und bei 750°C 2 Stunden kalziniert.

Der so erhaltene Katalysator hat eine Schneidhärte von 7,5 kg und ein Rüttelgewicht von 2010 g/l und eine Porosität von 0,12 cm$^3$/g.

## Patentansprüche

1. Kobaltkatalysatoren, die im kalzinierten, nicht reduzierten Zustand 35 bis 98 Gew.-% Kobaltoxid, 0 bis 40 Gew.-% Kupferoxide, 0 bis 20 Gew.-% Manganoxide, 0 bis 10 Gew.-% Molybdänoxide, 0 bis 10 Gew.-% Alkalioxid, 0 bis 15 Gew.-% Phosphorsäure, Polyphosphorsäure oder deren Salze und gegebenenfalls Füllstoffe enthalten, wobei die Summe der Gewichtsprozente sich immer zu nicht mehr als 100 addieren darf und die durch Verformen, Trocknen und Kalzinieren einer Masse aus 5 bis 100 Gew.-% des Mahlguts von bereits kalzinierten Formlingen und 95 bis 0 Gew.-% des gefällten, getrockneten und kalzinierten Niederschlages des Kobaltkatalysators bestehen.

2. Verwendung von Kobaltkatalysatoren nach Anspruch 1, zur Hydrierung von Nitrilen, Carbonsäuren und ungesättigten aliphatischen, cycloaliphatischen und aromatischen organischen Verbindungen, bei der Umsetzung von Aldehyden mit Aminen und bei der Umsetzung von Alkoholen mit Ammoniak, primären und sekundären Aminen.

3. Verfahren zur Herstellung der Kobaltkatalysatoren nach Anspruch 1, dadurch gekennzeichnet, daß man die Lösungen der Metallsalze mittels Alkalimetallcarbonatlösung bei einer Temperatur zwischen 30 bis 90°C auf einen pH-Wert zwischen 5 und 9 bringt, die ausgefällte Masse gewinnt und trocknet, diese nach der Kalzination abkühlt und, gegebenenfalls nach einer Nachwäsche, mit einer Lösung eines Salzes der Molybdänsäure tränkt und durch eine anschließende Säurebehandlung die Molybdänsäure auf der Masse fixiert sowie die Masse formt, trocknet, kalziniert, anschließend ganz oder teilweise mahlt, erneut verformt, trocknet und kalziniert.

## Claims

1. A cobalt catalyst which in the calcined, non-reduced state contains from 35 to 98% by weight of cobalt oxide, from 0 to 40% by weight of a copper oxide, from 0 to 20% by weight of a manganese oxide, from 0 to 10% by weight of molybdenum oxide, from 0 to 10% by weight of an alkali metal oxide, and from 0 to 15% by weight of phosphoric acid, polyphosphoric acid or a salt thereof, with or without fillers, the sum of the weight percentages never being more than 100, and is formed by molding, drying and calcining a composition of matter comprising 5-100% by weight of mill base from previously calcined moldings and 95-0% by weight of the dried and the calcined precipitate of the cobalt catalyst.

2. Use of a cobalt catalyst as claimed in claim 1 for hydrogenating nitriles, carboxylic acids and unsaturated aliphatic, cycloaliphatic and aromatic organic compounds in the reaction of aldehydes with amines and in the reaction of alcohols with ammonia and primary and secondary amines.

3. A process for preparing a cobalt catalyst as claimed in claim 1, which comprises adjusting the solutions of the metal salts with an alkali metal carbonate solution to pH 5-9 at 30-90°C, isolating the precipitate, drying, calcining, cooling, washing if desired, impregnating with a solution of a salt of molybdenic acid, fixing the molybdenic acid on the material by a subsequent acid treatment, molding, drying, calcining, milling wholly or in part, molding again, drying and calcining.

## Revendications

1. Catalyseurs au cobalt, qui contiennent, à l'état calciné, non réduit, 35 à 98% en poids d'oxyde de cobalt, 0 à 40% en poids d'oxydes de cuivre, 0 à 20% en poids d'oxydes de manganèse, 0 à 10% en poids d'oxydes de molybdène, 0 à 10% en poids d'oxyde de métal alcalin, 0 à 15% en poids d'acide phosphorique, d'acide polyphosphorique, ou de leurs sels et éventuellement des charges, où les sommes des pourcentages pondéraux ne peut jamais dépasser 100 et qui se composent d'une masse obtenue par moulage, séchage et calcination de 5 à 100% en poids du produit broyé de pièces moulées déjà calcinées et de 95 à 0% en poids du précipité séparé, séché et calciné du catalyseur au cobalt.

2. Utilisation de catalyseurs au cobalt suivant la revendication 1, en vue de l'hydrogénation de nitriles, d'acides carboxyliques et de composés organiques aromatiques, cycloaliphatiques et aliphatiques insaturés, lors de la réaction d'aldéhydes avec des amines et lors de la réaction d'alcools avec l'ammoniac, des amines primaires et secondaires.

3. Procédé de préparation des catalyseurs au cobalt selon la revendication 1, caractérisé en ce que l'on amène la valeur du pH des solutions des sels de métaux entre 5 et 9 à l'aide d'une solution de carbonate de métal alcalin à une température de 30 à 90°C, on sépare la masse précipitée et on la sèche, on refroidit cette dernière après calcination, éventuellement après un postlavage, on l'imprègne d'une solution d'un sel de l'acide molybdique et on fixe ensuite l'acide molybdique sur la masse par un traitement à l'acide subséquent, puis on moule la masse, on la sèche, on la calcine, on la broie ensuite totalement ou partiellement, on la moule à nouveau, la sèche et la calcine.